# EUROPEAN PATENT SPECIFICATION

(11) **EP 0 756 135 B1**
(45) Date of publication and mention of the grant of the patent: **03.07.2002**
(21) Application number: 95305249.5
(22) Date of filing: 27.07.1995
(51) Int. Cl.: F23L 15/02

(54) **A furnace having a low nitrogen oxide producing burner system and burning method**
Feuerung mit Brenneranlage und Verbrennungsverfahren mit niedriger Stickstoffoxyderzeugung
Four avec un système de combustion à fiable production d'oxyde d'azote et procédé de combustion

(43) Date of publication of application: 29.01.1997
(73) Proprietor: TOKYO GAS COMPANY LIMITED, Tokyo (JP)
(72) Inventor: Nakamachi, Ichiro, Abiko City, Chiba Pref. (JP)
(74) Representative: Bryer, Kenneth Robert

(56) References cited:
- EP-A- 0 333 239
- EP-A- 0 343 746
- US-A- 3 527 445
- PATENT ABSTRACTS OF JAPAN vol. 18 no. 607 (M-1707) ,18 November 1994 & JP-A-06 229509 (TOKYO GAS CO LTD) 16 August 1994,
- PATENT ABSTRACTS OF JAPAN vol. 13 no. 434 (M-875) ,28 September 1989 & JP-A-01 167591 (TOKYO GAS CO LTD) 3 July 1989,

## Description

The present invention relates to an improved low nitrogen oxide producing burner system and burning method and a furnace equipped with the burner system, particularly for use in high temperature industrial furnaces, usually with hydrocarbon fuels in the gaseous state.

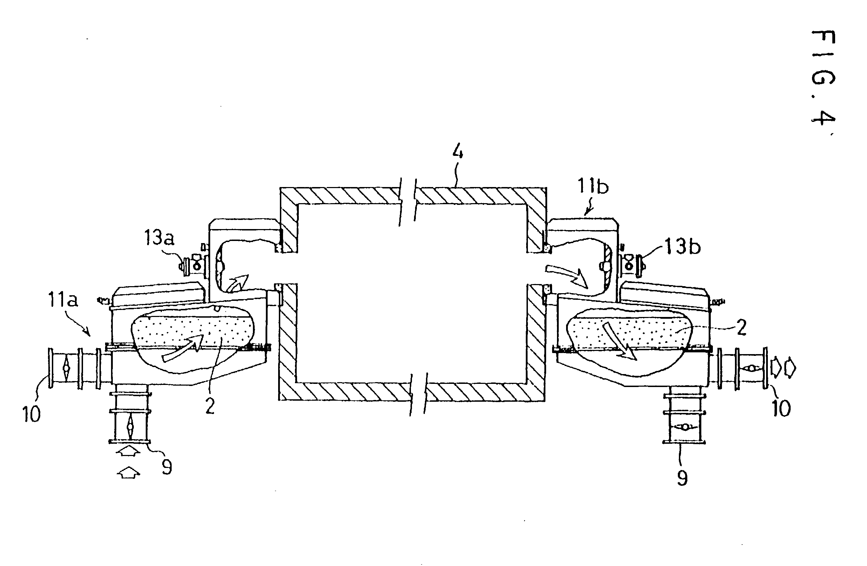

A conventional, prior-art regenerative burner is shown in Figure 4 and comprises a pair of burner means 11 connected to a furnace 4 and each having a regenerating section 2 and a fuel supply section 13. In use, air is introduced through an air inlet section 9, as shown by the arrows in the drawing, to one of the burner means 11a where it is preheated in the regenerating section 2. Then, while rising, it is mixed with fuel injected through the fuel supply section 13a, ignited by a pilot flame and the flame is subsequently injected into the furnace 4 where it continues to burn. The exhaust gas from the furnace 4 is then used for heat exchange, i.e. for heat regeneration, in the regenerating section of the other burner means 11b and subsequently exits through an exhaust section 10 thereof. The burner means 11 are used alternately for burning and exhausting at very short intervals of tens of seconds to several minutes.

This burning method, i.e., regenerative burning method, can achieve high waste-heat recovery, resulting in good fuel economy, and is also important as regards environmental protection since it also results in decreased CO₂ emissions.

Although the above, known regenerative burning method is excellent as a means of increasing waste heat recovery, it has a very great disadvantage in that the temperature of the preheated combustion air is so high that the flame temperature is raised and results in remarkably increased nitrogen oxide (Nox) emissions.

Even if known NOx decreasing techniques are applied to the above regenerative combustion method, such as staged combustion, exhaust gas recirculation or water spraying, the NOx emissions can be decreased at most by only 50 to 60%, from 500-1200ppm (O₂ 11%) to 200-500 ppm (O₂ 11%). This does not meet the regulatory level of 180 ppm (O₂ 11%) required by the Air Pollution Control Law of Japan.

In JP-A-06229509 (Patent Abstracts of Japan Vol. 18, no. 607 (M-1707) 1994) there is disclosed a regenerative-type burner system utilising alternative combustion where the air supply from the regenerative pre-heaters is directly supplied into the furnace and fuel is also directly supplied into the furnace at a separate position.

In EP-A-0343746 there is disclosed a furnace where air and fuel are separately supplied directly into the furnace. An auxiliary fuel supply is used when the temperature of the furnace is lower than the temperature at which the air/fuel mixture is ignited.

Neither of these prior art systems totally overcomes the problems outlined above, in particular with regard to NOx levels.

The object of the present invention is to provide a burner system and method which can achieve low NOx emissions even when the combustion air is heated to relatively high temperatures and which, at least in a preferred embodiment, can result in stable burning even at variable furnace temperatures.

Accordingly, in one aspect, the present invention provides a furnace (4) having a low-nitrogen-oxide-producing regenerative burner system comprising a pair of regenerative preheaters (1a, 1b) for combustion air, wherein each regenerative preheater has an air supply and exhaust port connectable to the furnace to supply preheated air directly there into or to receive combustion products therefrom for heat recovery, and in that the said burner system comprises a staged in-furnace combustion system including a plurality of fuel nozzles (7) opening directly into the inside of the furnace wall at respective positions along at least one wall of the said furnace and spaced from the respective air supply and exhaust ports, the fuel nozzles being spaced along the flow pathway of the stream of air delivered, in use, to the furnace through the regenerative preheaters for staged in-furnace-combustion of the said pre-heated air between the respective upstream and downstream air supply and exhaust ports.

With the present invention mixing of the fuel and air occurs within the furnace itself in use.

The combustion system would in most cases be operated with alternating reversal of the airflow therethrough, in use, the air first being introduced through one regenerator while the other is heated by the exhaust gases and the air then being introduced through the said other regenerator while the exhaust gases exit through the first regenerator to reheat it.

The present invention also provides a method of achieving fuel-in-air combustion with low production of nitrogen oxides, which method comprises: injecting preheated air directly into a furnace; injecting fuel in series directly into the furnace from a plurality of fuel nozzles spaced along the air stream of directly supplied preheated air; and allowing the injected fuel from each fuel nozzle to mix with the furnace gases in the furnace prior to their sequential mixture with the preheated air supply whereby the injected fuel and preheated air to form a combustible mixture which burns within the furnace at a relatively low flame temperature such as to inhibit the formation of nitrogen oxides.

In particular the method may be carried out with the use of a combustion system according to the present invention and can achieve good waste heat recovery with resulting fuel efficiency, while maintaining low CO₂ and NOx emissions.

The method of the present invention may use a burner comprising of one or more pairs of regenerators in which the regenerating section only is located inside the regenerator and the air supply and exhaust ports of the regenerators open directly into the furnace; and a plurality of fuel injection nozzles are provided for each of the air supply and exhaust ports, which also opens directly into the furnace at locations apart from and along the air stream of the corresponding air supply and exhaust ports, wherein the regenerators are alternately used for burning; the fuel may be injected steadily from each or all of the fuel injection nozzles or through selected nozzles in synchronism with the corresponding air supply.

Several embodiments of the invention will now be more particularly described, by way of example, with reference to the accompanying drawings, in which:
Figure 1 is a sectional plan illustrating an embodiment of the present invention;
Figure 2 is a vertical section taken on the line A-A of Figure 1;
Figure 3 is a graph showing NOx levels produced by a regenerative burning method of the present invention compared with those produced by a prior art regenerative burner. In the graph of Figure 3, points marked ○ represent results from the prior art burning method; points marked ● represent results of the burning method of the present invention; and * indicates the legal regulatory level, with the furnace temperature in degrees Centigrade (°C);
Figure 4 is a sectional illustration showing a known regenerative burner (prior art);
Figure 5 is a sectional illustration showing a known burner (prior art); and
Figure 6 is a sectional illustration showing another known embodiment (prior art).

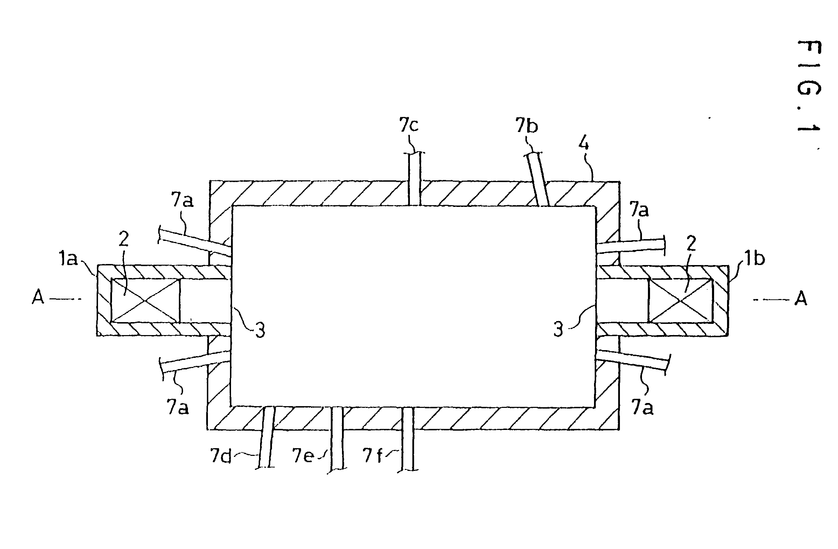

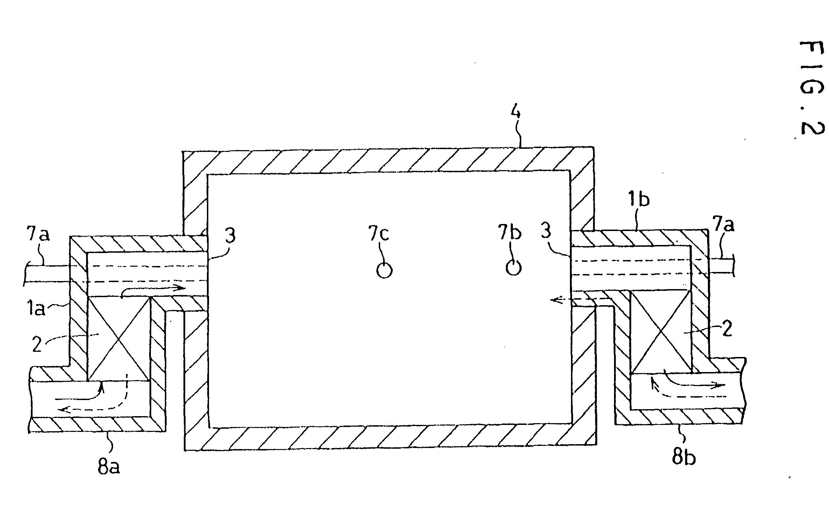

With reference to Figures 1 and 2 of the drawings corresponding features of the embodiment shown are indicated by the same references. Figures 1 and 2 show a furnace 4 equipped with a burner system including a pair of regenerators each designated 1. Each regenerator 1 has an inlet section 8 for the inlet of air and the outlet of exhaust gas, a regenerating section 2 for preheating the air or for recovering heat from exhaust gas, and an air supply and exhaust port 3 which opens into the furnace interior.

The furnace 4 may be equipped with more than one pair of regenerators 1 and each pair can be installed in one of various different configurations, such as in series, that is with the regenerators opening into opposite walls of the furnace as shown in Figure 1, or in parallel, that is, with the regenerators arranged alongside each other and opening into the same wall of the furnace. The regenerators' air supply and exhaust ports 3 open directly into the furnace 4. A plurality of fuel injection nozzles 7 (a,b,c,d,e, and f) associated with each of the air supply and exhaust ports 3 opens or open directly into the furnace 4 at locations spaced from the corresponding air supply and exhaust port 3 and spaced along the airstream provided in use by the air supply ports 3.

The positional relationships between the air supply and exhaust ports 3 and the fuel injection nozzles 7 (a,b,c,d,e and f), their installation angles, injection velocities and their quantitative relationship can be selected as is appropriate for a particular furnace's application or requirements. The plurality of fuel nozzles can be installed anywhere as long as there are a plurality of nozzles arranged on the longitudinal walls of the furnace so as to be installed along the stream of air. As an example, they may be installed in any of the following: a furnace wall having an air supply and exhaust port, a lateral furnace wall, etc.
As for the fuel injection method, each fuel injection nozzle 7 (a,b,c,d,e and f) can be used in any combination with each other and each can be used either for injection in synchronism with one or more associated regenerators 1 which are used alternately for burning and regeneration or for steady fuel injection, irrespective of the regenerators 1 being used for burning.

Figures 1 and 2 show specific arrangements, by way of example. In Figure 1, two fuel injection nozzles indicated 7a are located near and symmetrically on opposite sides of each of two air supply and exhaust ports 3. Each nozzle 7a can be arranged to direct a fuel flow in parallel with, but more preferably angled inwardly towards, an air flow through the associated regenerator port 3.

The next fuel injection nozzle 7b shows an example of a nozzle located remote from the first fuel nozzle 7a for injection towards and downstream of an air supply and exhaust port 3. The fuel injection nozzles 7c, 7d, 7e and 7f show examples of the use of multiple fuel injection nozzles arranged in order along the air stream of the preheated air from the air supply and exhaust port 3.

The regenerative burner system associated with the furnace 4 further includes control means (not shown) for regulating and controlling operational parameters such as the air temperature, air flow and direction, and the conditions of fuel injection.

In use, air is introduced into the system as shown by the solid line arrow in Figure 2, through the air inlet and exhaust section 8a of one of the regenerators la. The air is preheated in the regenerating section 2 of the regenerator and then injected into the furnace 4. Here preheated air mixes with furnace gas and fuel injected through appropriate nozzles 7. The combination of preheated air, fuel and furnace gas in the appropriate mixture results in combustion. The hot combustion products (furnace gas) are exhausted from the furnace through the exhaust port 3 of the other regenerator 1b of the pair of regenerators 1 and pass into its regenerating section 2. Here some of the heat is recovered in heating the regenerating section before the combustion products exit the system through the air introducing and exhaust section 8b, as again shown by a solid line arrow in Figure 2.

The regenerative burner system can operate in a series or as a stand alone system. In the stand alone system the combustion process (or cycle) is repeated in two opposite directions alternately at short intervals of tens of seconds to several minutes. The broken arrows shown in Figure 2 show a state in which air is introduced into the system through the regenerator 1b previously used for the exhaust and the regenerator section 2 of which has been heated by the exhaust gases. Thus, preheated air only is injected into the furnace from this regenerator 1b and causes combustion of fuel supplied through appropriate fuel nozzles 7, which may differ from those used previously. The combustion products are then exhausted through the other regenerator 1a, yielding up heat in its regenerating section 2.

Within the furnace 4, the air and fuel form respective independent jets which suck large amounts of the combustion gas filling the furnace, including combustion products from previous combustion, into them before mixing together to form the combustible mixture. In other words, both the air and fuel are diluted by furnace gas before they are mixed with each other to initiate burning. Hence, slow burning at a low oxygen concentration occurs in the furnace, the presence of large amounts of combustion gas keeping the flame temperature relatively low and effectively inhibiting the formation of nitrogen oxides.

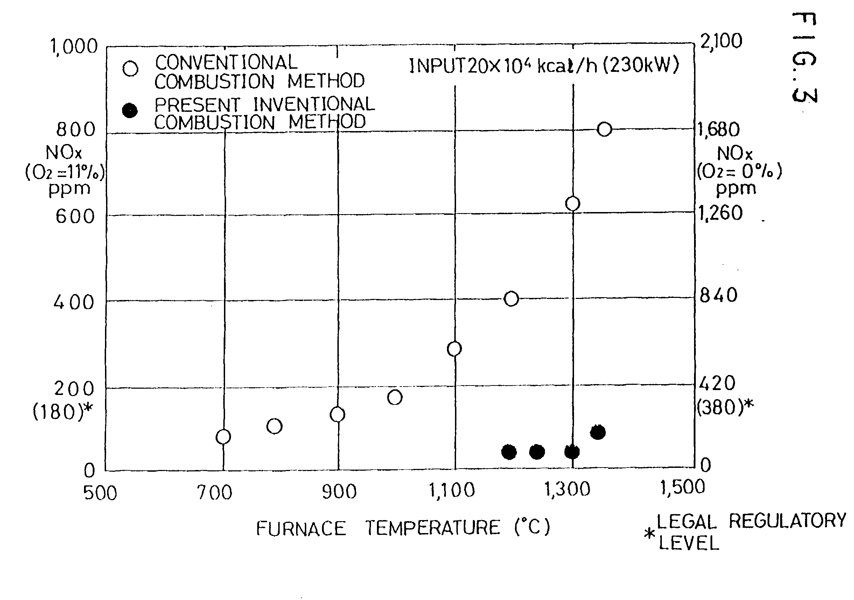

Reference is now made to Figure 3 which gives comparative results for a prior art furnace and a furnace of the invention. In experiments performed at a furnace temperature of 1300 °C, the NOx emissions produced by a prior art regenerative burner ranged between 500 and 1000 ppm (O₂ 11%) while those produced by the burning method of the present invention ranged between 50 and 100 ppm (O₂ 11%), achieving a NOx reduction of about 90%.

In prior art furnaces, fuel is supplied together with air into the furnace in an alternating fashion through the two regenerators but in the present invention it is possible to supply fuel steadily, without alternation. Thus, with the present invention, fuel change-over valves are not necessarily required, which is of significant advantage in that the equipment can be simplified and manufacturing and production costs can be reduced.

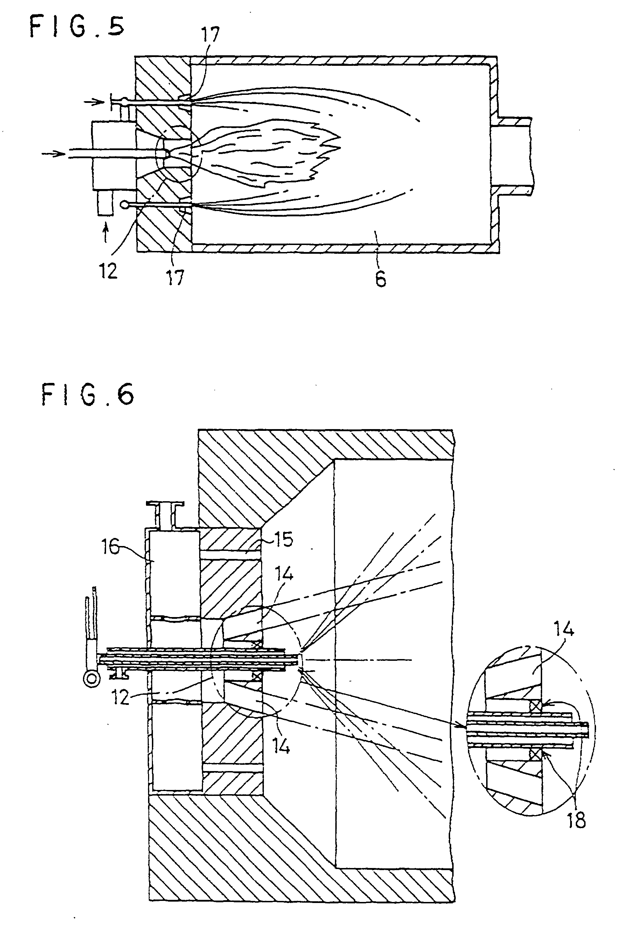

For a clearer understanding of the present invention, the present invention is described in comparison with known burning apparatus shown in Figure 5 and disclosed in US Patent 4,496,306. Figure 5 shows an example of apparatus for carrying out a fuel-staged combustion method. In this method, part of the fuel and all of the combustion air are mixed in a mixing zone 12 prior to their entry into a furnace, here indicated 6. The combustion of this fuel occurs in the presence of a very large and excessive amount of air and produces a very large and excessive air flame. The balance of the fuel is injected into the furnace around the flame through secondary nozzles 17 to be mixed with the very large air-rich flame in a downstream region. The purpose of the fuel-staged combustion method is to reduce the NOx generated at the centre of the flame by the burning of the mixture of combustion air and fresh primary fuel and to effect a complete combustion reaction with the surplus oxygen by the addition of secondary fuel, thereby finally producing a low oxygen exhaust gas composition.

The complete combustion of fuel requires large volumes of air. For example, in the case of burning natural gas, the volume of air required for complete combustion is more than ten times that of the natural gas.

In the present invention, the separate air and fuel jets, in particular, act to suck furnace gas in the furnace into the combustible mixture of air and fuel to be mixed with it before burning occurs. It will be appreciated that the amount of furnace gas sucked into a jet from the furnace is proportional to the momentum of the jet; these air and fuel jets are very effective in sucking a large amount of the furnace gas into the combustion mixture and this inhibits the formation of NOx by keeping the flame temperature relatively low.

In the prior art example shown in Figure 5, all the oxygen rich air is mixed with the primary fuel for burning immediately on entry into the furnace. The burning causes the combustion gas (in the presence of the very excessive, oxygen rich flame) to expand suddenly and stall, and thus lose any force which would suck the furnace gas into the combustible mixture. Therefore, the prior art example of Figure 5 has very small amounts of the inert furnace gas in the combustible mixture as compared to the present invention and the formation of NOx starts immediately the primary fuel starts to burn in the excessive air supply hence the prior art method is very much less successful in inhibiting NOx formation.

For a further understanding of the present invention, the present invention is also described below in detail in comparison to another prior art burning apparatus shown in Figure 6 and disclosed in US Patent No. 4,842,509.

The prior art example of Figure 6 shows a typical two-stage air combustion burner. Fuel is supplied to a central zone 12 of a burner means while air is supplied through adjacent primary outlets 14. The fuel and less than the theoretically required amount of primary air are mixed here for burning to form a stable primary burning region. Secondary air holes 15 are provided around the burner means and the secondary air is mixed with the burning product formed after the first step of primary burning to complete combustion. In the burner, as shown in Figure 6, the fuel injection port and air injection outlets 14, 15 are provided in a region surrounded by a thermally-insulating refractory material so as to retain the heat from the initial combustion in this region and stabilise the flame: a high temperature is thus likely to occur. On the contrary, in the present invention, the fuel injection ports 7 (a,b,c,d,e and f) and the air supply and exhaust ports 3 are located so as to open directly into the furnace so that the flame is within the furnace itself. Some of the heat generated in the burning is therefore lost through radiation to surrounding areas which effectively keeps the flame temperature low, and consequently the NOx production low.

Moreover, as regards the sucking in of furnace gas existing in the furnace to be mixed with the combustible mixture, the suction achieved by the air jets of the apparatus of Figure 6 is limited by the existence of the refractory wall enclosing the primary burning zone and this consequently limits the decrease in NOx production that can be achieved by the incorporation of furnace gas in the combustible mixture. On the contrary, in the present invention, since the fuel jets and the air jets enter the furnace 4 directly, there is nothing to limit the suction of the gas existing in the furnace into the jets, and the respective jets can suck large amounts of the furnace gas into the combustible mixture, achieving a remarkable reduction in NOx formation.

## Claims

1. A furnace (4) having a low-nitrogen-oxide-producing regenerative burner system comprising a pair of regenerative preheaters (1a, 1b) for combustion air, wherein each regenerative preheater has an air supply and exhaust port connectable to the furnace to supply preheated air directly there into or to receive combustion products therefrom for heat recovery, and in that the said burner system comprises a staged in-furnace combustion system having a plurality of fuel nozzles (7) opening directly into the inside of the furnace wall at respective positions along at least one wall of the said furnace and spaced from the respective air supply and exhaust ports, the fuel nozzles being spaced along the flow pathway of the stream of air delivered, in use, to the furnace through the regenerative preheaters for staged in-furnace-combustion of the said pre-heated air between the respective upstream and downstream air supply and exhaust ports.

2. A furnace according to Claim 1, wherein the fuel nozzles are provided in all of the walls of the furnace.

3. A furnace according to any preceding claim, wherein a plurality of pairs of regenerative preheaters (1a, 1b) is provided.

4. A furnace according to any preceding claim wherein, the or each pair of regenerative preheaters is or are located in the same side of the furnace.

5. A furnace according to any preceding claim, wherein at least one fuel nozzle (7a) is arranged to direct a fuel supply into the furnace (4) at an angle towards an air stream of preheated air adjacent an air supply-and-exhaust port (3).

6. A method of achieving fuel-in-air combustion with low production of nitrogen oxides, which method comprises: injecting preheated air directly into a furnace; injecting fuel directly into the furnace from a plurality of fuel nozzles spaced along the air stream of directly supplied preheated air; and allowing the injected fuel from each fuel nozzle to mix with the furnace gases in the furnace prior to their sequential mixture with the preheated air supply, whereby the injected fuel and preheated air forms a combustible mixture which burns within the furnace at a relatively low flame temperature such as to inhibit the formation of nitrogen oxides.

7. A method according to Claim 6, wherein fuel is supplied to the furnace continuously through the fuel nozzles.

8. A method according to Claim 6 or 7, which further includes the step of stopping the flow of air through a first regenerative preheater and reversing the air flow with the introduction of air into the furnace through a second regenerative preheater once this has been heated to a desired temperature by exhaust combustion products, and repeating the air flow reversal cyclically while maintaining fuel injection into the furnace to maintain combustion therein either by effecting a steady fuel supply at selected fuel inlet positions in synchronism with the air flow reversal.

## Patentansprüche

1. Ofen (4) mit einem gering Stickoxyd erzeugenden, regenerativen Brennersystem, mit einem Paar regenerativer Vorwärmern (1a, 1b) für die Verbrennungsluft, wobei jeder Vorwärmer eine Luftversorgungs- und eine mit dem Ofen verbindbare Auslassöffnung besitzt, um diesen direkt mit vorgewärmter Luft zu versorgen, oder zur Wärmerückgewinnung Verbrennungsprodukte aus diesem aufzunehmen, und wobei das Brennersystem ein gestuftes Verbrennungssystem innerhalb des Ofens mit einer Mehrzahl von Brennstoffdüsen (7) aufweist, die sich direkt an entsprechenden Positionen entlang wenigstens einer Wand des Ofens in einem Abstand von den jeweiligen Luftversorgungs- und Auslassöffnungen in das Innere der Ofenwand öffnen, wobei die Brennstoffdüsen in Abständen entlang des Strömungswegs des bei Betrieb durch die regenerativen Vorwärmer an den Ofen abgegebenen Luftstroms zur gestuften Verbrennung der vorgewärmten Luft innerhalb des Ofens zwischen den jeweiligen oberstromigen und unterstromigen Luftversorgungs- und Auslassöffnungen angeordnet sind.

2. Ofen nach Anspruch 1, wobei die Brennstoffdüsen in allen Wänden des Ofens vorhanden sind.

3. Ofen nach einem der vorhergehenden Ansprüche, wobei ein Paar regenerativer Vorwärmer (1a, 1b) vorhanden ist.

4. Ofen nach einem der vorhergehenden Ansprüche, wobei das oder jedes Paar regenerativer Vorwärmer auf der gleichen Seite des Ofens angeordnet ist, bzw. sind.

5. Ofen nach einem der vorhergehenden Ansprüche, wobei wenigstens eine Brennstoffdüse (7) so angeordnet ist, dass sie eine Brennstoffzufuhr in einem Winkel auf einen Luftstrom vorgewärmter Luft neben einer Luftversorgungs- und Auslassöffnung in den Ofen richtet.

6. Verfahren zur Bewirkung einer Brennstoff-in-Luft-Verbrennung mit einer geringen Erzeugen von Stickoxyden, wobei das Verfahren besteht aus: Einspeisen vorgewärmter Luft direkt in einen Ofen; Einspeisen von Brennstoff aus einer Mehrzahl von Brennstoffdüsen, die in Abständen entlang des Luftstroms der zugeführten erwärmten Luft angeordnet sind; und Ermöglichen, dass der von jeder Brennstoffdüse eingespeiste Brennstoff sich mit den Ofengasen im Ofen vor ihrer anschließenden Mischung mit der vorgewärmten Luftzufuhr mischt, wodurch der eingespeiste Brennstoff und die vorgewärmte Luft eine brennbare Mischung bilden, die in dem Ofen bei einer relativ geringen Flammentemperatur brennt, um die Bildung von Stickoxyden zu verhindern

7. Verfahren nach Anspruch 6, wobei der Brennstoff dem Ofen durch die Brennstoffdüsen kontinuierlich zu geführt wird.

8. Verfahren nach Anspruch 6 oder 7, das weiter den Schritt des Anhaltens des Luftstroms durch einen ersten regenerativen Vorwärmer beinhaltet, sowie das Umkehren des Luftstroms mit der Einführung von Luft in den Ofen durch einen zweiten regenerativen Vorwärmer, sobald dieser durch ausgelassene Verbrennungsprodukte auf eine gewünschte Temperatur vorgewärmt ist, und das zyklische Wiederholen der Luftstromumkehrung wobei auch die Brennstoffeinspeisung in den Ofen zur Aufrechterhaltung der Verbrennung durch eine stetige Brennstoffzufuhr an ausgewählten Brennstoffeinlasspositionen synchronisiert mit der Luftstromumkehr beibehalten wird.

## Revendications

1. Four (4) comportant un système de brûleurs à récupération de chaleur produisant peu d'oxydes d'azote comprenant une paire de dispositifs de préchauffage à récupération de chaleur (1a, 1b) destinés à l'air de combustion, dans lequel chaque dispositif de préchauffage à récupération de chaleur comporte un orifice d'alimentation en air et un orifice d'échappement pouvant être raccordés au four afin de fournir de l'air préchauffé directement dans celui-ci ou afin de recevoir les produits de combustion depuis celui-ci en vue d'une récupération de chaleur, et dans lequel ledit système de brûleurs comprend un système de combustion étagée dans le four comportant une pluralité de buses à combustible (7) débouchant directement à l'intérieur de la paroi du four à des positions respectives le long d'au moins une paroi dudit four et espacées des orifices respectifs d'alimentation en air et d'échappement, les buses à combustible étant espacées le long de la voie d'écoulement du flux d'air délivré, en utilisation, au four par l'intermédiaire des dispositifs de préchauffage à récupération de chaleur en vue d'une combustion étagée dans le four dudit air préchauffé entre les orifices respectifs amont et aval d'alimentation en air et d'échappement.

2. Four selon la revendication 1, dans lequel les buses à combustible sont disposées dans la totalité des parois du four.

3. Four selon l'une quelconque des revendications précédentes, dans lequel une pluralité de paires de dispositifs de préchauffage à récupération de chaleur (1a, 1b) est prévue.

4. Four selon l'une quelconque des revendications précédentes, dans lequel la paire ou chaque paire des dispositifs de préchauffage de récupération de chaleur est ou sont situés du même côté du four.

5. Four selon l'une quelconque des revendications précédentes, dans lequel au moins une buse à combustible (7a) est disposée afin de diriger une alimentation en combustible dans le four (4) à un angle vers un flux d'air d'air préchauffé de façon adjacente à un orifice d'alimentation et d'échappement d'air (3).

6. Procédé d'obtention d'une combustion de carburant dans l'air avec une faible production d'oxydes d'azote, lequel procédé comprend : l'injection d'air préchauffé directement dans un four, l'injection de combustible directement dans le four depuis une pluralité de buses à combustible espacées le long du flux d'air d'air préchauffé fourni directement, et le fait de laisser le combustible injecté depuis chaque buse à combustible se mélanger avec les gaz du four dans le four avant leur mélange séquentiel avec l'alimentation en air préchauffé, d'où il résulte que le combustible injecté et l'air préchauffé forment un mélange combustible qui brûle à l'intérieur du four à une température de flamme relativement basse de façon à empêcher la formation d'oxydes d'azote.

7. Procédé selon la revendication 6, dans lequel le combustible est fourni au four en continu par l'intermédiaire des buses à combustible.

8. Procédé selon la revendication 6 ou 7, lequel comprend en outre l'étape consistant à arrêter l'écoulement d'air au travers d'un premier dispositif de préchauffage à récupération de chaleur et à inverser l'écoulement d'air avec l'introduction d'air dans le four par l'intermédiaire d'un second dispositif de préchauffage à récupération de chaleur une fois que celui-ci a été chauffé à une température souhaitée par les produits d'échappement de la combustion, et répéter de façon cyclique l'inversion de l'écoulement d'air tout en maintenant l'injection de combustible dans le four afin de maintenir la combustion dans celui-ci néanmoins en réalisant une alimentation régulière en combustible à des positions d'entrée de combustibles sélectionnées en synchronisme avec l'inversion de l'écoulement d'air.
